# EUROPEAN PATENT APPLICATION

(11) **EP 3 848 277 A1**
(43) Date of publication of application: **14.07.2021**
(21) Application number: 20380021.4
(22) Date of filing: 10.12.2020
(51) Int. Cl.: B62M 3/00, B62M 1/10

(54) **HYDRAULIC FORCE MULTIPLIER APPLIED TO BICYCLES**

(30) Priority: 17.12.2019 ES 201900599 U
(71) Applicant: Quiñones de Ciaran, Francisco Javier, 33314 Villaviciosa, Asturias (ES)
(72) Inventor: Quiñones de Ciaran, Francisco Javier, 33314 Villaviciosa, Asturias (ES)

(57) **Abstract**

The present invention refers to a hydraulic force multiplier applied to bicycles. This system reduces the effort required for cycling uphill. The invention consists of the crank axle-cranks-pedals (16, 3, 18 y 2) assembly mounted on the bearings (17) of the bike frame (1) turning independently of the support plate (6) and the chainwheel (4), which in turn are mounted on bearings (9) on the crank axle (16), with a hydraulic system consisting of a master cylinder (36) and a slave cylinder (37) in one same block (13), fixed on the support plate (6). Both cylinders (36 y 37) are communicated by a duct (22) through which hydraulic liquid flows, being the slave cylinder (37) of a diameter greater than that of the master cylinder (36). The rod (11) of the crank (3) pushes the master cylinder (36) piston (23), compressing the hydraulic fluid and circulating it to the slave cylinder (37) by compressing its piston (32) and moving it together with the pusher (19), attached at its other end to the rod (12) of the chainwheel (4) by means of a ball joint (20), turning it, thus multiplying the initial force exerted on the crank axle-cranks-pedals (16, 3, 18 y 2) assembly, by the chain (26) being transmitted to the drive wheel sprocket. The system described is very light, small in size, and can be installed on all types of bikes, either as standard or as an adaptable kit.

## Description

### Sector of the technique

The present invention is part of the technical sector of systems applied to transmissions, as an integral part of them, to obtain an increase in force with a lower energy requirement.

At present the bikes that are sold come equipped with factory with fixed or variable mechanical transmission systems by means of gears and chain, consisting in transmitting the movement of a chainwheel solidary to a axle moved by the cranks-pedals assembly, the chainwheel transmits the movement through the chain to a solid toothed sprocket with the tractor wheel.This mechanism described is fixed ratio (a chainwheel and a sprocket), there is also the variable ratio, currently the most used, being endowed with several chainwheel and several toothed sprocket, which allows them to be geared by changing their development according to the needs of the terrain, either to climb a slope, lower it or on level ground.

This transmission and development change system is currently fitted to all types of bikes, and there are also bikes that are driven by electric motors, powered by rechargeable batteries, but they do not have enough power to climb large slopes, nor much autonomy. Bikes with electric motorization system are usually heavier when carrying the engine and battery, mainly used for short and urban routes.

The systems described above raise in principle the problem of the physical effort required to be made when climbing large slopes, despite the help provided by variable ratio transmission, and in the case of bikes fitted with electric engines, the low power of their engines, the greater weight of the engine/battery assembly, the low autonomy and the high price.

The present invention counteracts these inconveniences by being able to climb slopes by pedaling with less effort.

### State of the art

There is a device similar to that described in the present invention that reflects the state of the art related to it. The following is its reference:
Document P201800273 refers to a hydraulic force multiplier applied to the bike transmission system, which has an additional plate called the support plate, coaxially fixed to the conventional chainwheel that engages the chain. This additional plate rotates independently of the cranks and in the is fixed the master cylinder, also receiving the multiplied force of the piston of the slave cylinder, being this slave cylinder fixed on the cranks which, in turn, pushes the piston of the master cylinder by means of a rod, transmitting the multiplied force of the pedal of the crank by the hydraulic fluid flowing through the hose to the piston of the slave cylinder and this one by means of a pusher to the chainwheel and chain.

### Explanation of the invention

The present invention concerns a hydraulic force multiplier applied to bicycles. This system reduces the effort required to climb slopes by pedalling.

The present invention consists of the cranks axle-cranks-pedals assembly mounted on the bearings of the bike frame turning independently of the support plate and the chainwheel, which in turn are mounted on bearings on the crank axle shaft, with a hydraulic system consisting of a master cylinder and a slave cylinder in one block, fixed on the support plate. Both cylinders (master and slave) are connected by a duct through which hydraulic fluid flows, the slave cylinder being larger in diameter than the master cylinder. The rod of the crank pushes the piston of the master cylinder, compressing the hydraulic liquid and making it circulate to the slave cylinder by compressing its piston and moving it together with the pusher, joined at the other end by a ball joint to the rod of the chainwheel, making it rotate and thus multiplying the initial force exerted on the cranks axle-cranks-pedals assembly, which is transmitted by the chain to the pinion of the traction wheel. The result is that the force exerted when pedalling is multiplied to the drive wheel by as many times as the surface area of the slave cylinder piston is greater than that of the master cylinder piston.

The advantages of this invention in relation to the state of the technique mentioned above are several. First of all this invention has integrated the master cylinder and the slave cylinder in the same block, not requiring a flexible hose to communicate both cylinders through which the hydraulic fluid circulates, since these are communicated by an internal duct that owns the block. Likewise, the crank of this invention needs no support for the slave cylinder, as it is mounted on the support plate. In addition, the slave cylinder piston pusher does not act on the support plate, but on the chainwheel. These three differences make this new invention less bulky, requires fewer component parts to carry out its function and is lighter in weight. There are also differences in the locking mechanism to cancel the action of the hydraulic multiplier, why this new invention, in addition to locking the crank with the support plate, it also locks the chainwheel.

The system described is very light, of reduced dimensions, and can be installed on all types of bikes, mounting it as standard or as an adaptable kit, regardless of whether they have a fixed (one chainwheel and one sprocket) or variable (several chainwheels and sprockets) ratio, as both systems are fully compatible with this invention.

### Brief description of the drawings

For a better understanding of the invention as applied to the transmission mechanism of a bike and for guidance purposes only, each of the components numbered in the figures accompanying this descriptive report is detailed below. This numbering is the same for the three figures. That is, the components which are repeated in more than one figure are in all of them with the same number.

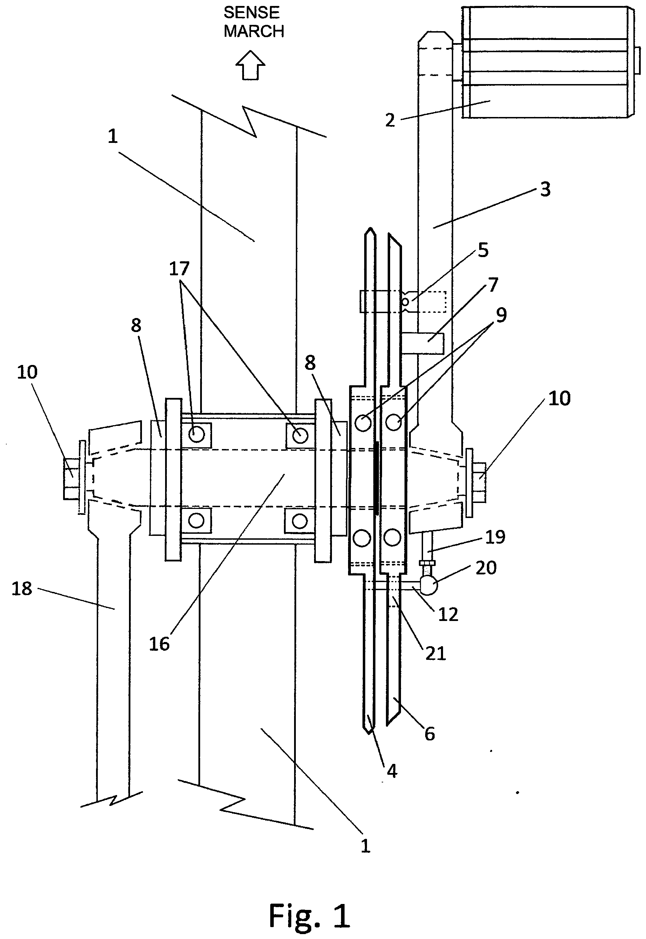

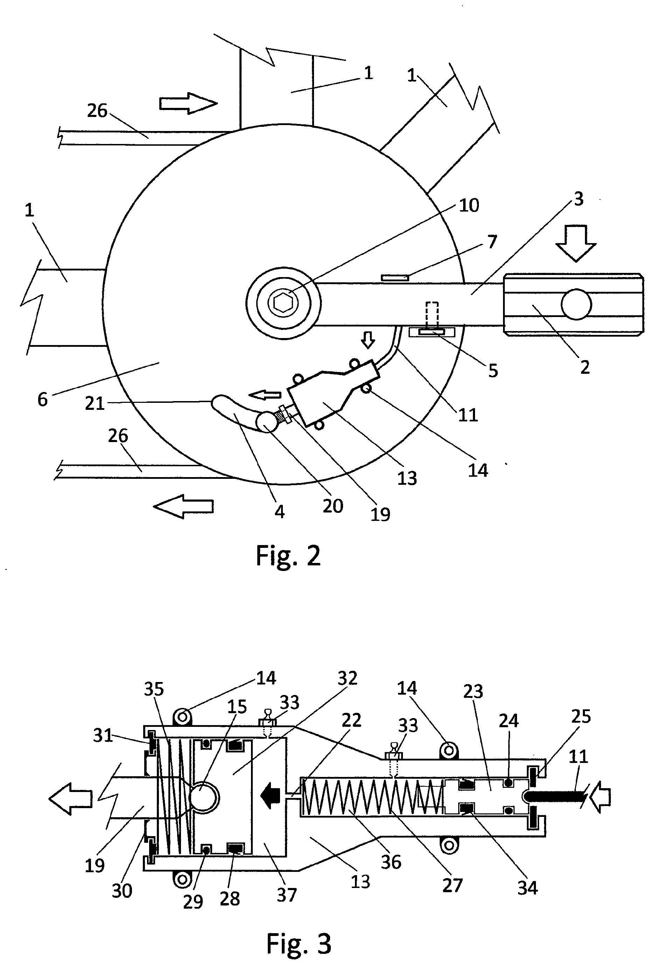

Figure 1 shows a top view of the device as it is mounted on the bike, Figure 2 shows a section of Figure 1, and Figure 3 shows a section of the hydraulic system cylinders.

### Figures 1. 2 and 3:

1 - Bike frame (Fig. 1 and 2)
2 - Pedal (Fig. 1 and 2)
3 - Right crank (Fig. 1 and 2)
4 - Chainwheel (Fig. 1 and 2)
5 - Locked/unlocked hydraulic system (Fig. 1 and 2)
6 - Support plate (Fig. 1 and 2)
7 -Anti-reverse stop crank (Fig. 1 and 2)
8 - Threaded ring anti-displacement bearing (Fig. 1)
9 - Bearings (Fig. 1)
10 - Crank to axle crank screw (Fig. 1 and 2)
11 - Rod of the crank (Fig. 2 and 3)
12 - Rod of the chainwheel (Fig. 1)
13 - Master and slave cylinder block (Fig. 2 and 3)
14 - Block cylinders anchor to support plate (Fig. 2 and 3)
15 - Ball joint (Fig. 3)
16 - Cranks axle (Fig. 1)
17 - Cranks axle bearings (Fig. 1)
18 - Left crank (Fig. 1)
19 - Pusher (Fig. 1, 2 and 3)
20 - Ball joint (Fig. 1 and 2)
21 - Rod scrolling slot (Fig. 1 and 2).
22 - Hydraulic liquid duct (Fig. 3)
23 - Master cylinder piston (Fig. 3)
24 - 2nd Master cylinder rubber ring (Fig. 3)
25 - Master cylinder circlip (Fig. 3)
26 - Transmission chain (Fig. 2)
27 - Master cylinder recovery spring (Fig. 3)
28 - 1st slave cylinder rubber ring (Fig. 3)
29 - 2nd slave cylinder rubber ring (Fig. 3)
30 - Slave cylinder dust guard (Fig. 3)
31 - Slave cylinder circlip (Fig. 3)
32 - Slave cylinder piston (Fig. 3)
33 - Hydraulic liquid bleeder (Fig. 3)
34 - 1st Master cylinder rubber ring (Fig. 3)
35 - Slave cylinder recovery spring (Fig. 3)
36 - Master cylinder (Fig. 3)
37 - Slave cylinder (Fig. 3)

### Detailed explanation of a mode of realisation of the invention

As an example, a case is exposed for practical realization of the "Hydraulic force multiplier applied to bikes", which is the object of the present invention.

For the realization of this invention and put it into operation it is advisable to use light materials for its component parts.

A block of hydraulic cylinders (13), of which one is the master cylinder (36) and other is the slave cylinder (37). Inside the master cylinder (36) there is a piston (23), fitted with two rubber rings (34 and 24), whose function is to provide a hermetic fit with the internal walls of the cylinder (36), thus being able to transmit and maintain the pressure of the hydraulic liquid. This piston (23) has its end lowered closest to the duct (22) which communicates the master cylinder (36) with the slave (37) so that it can house the spring (27) which returns it to the rest position when no pressure is being exerted on it by means of the rod of the crank (11). The circlip (25) keeps the piston-spring assembly (23-27) inside the master cylinder (36), preventing it from moving out of the cylinder and only allowing it to travel inwards, as indicated by the arrow in Figure 3. When the piston (23) is pressed down with the rod (11), it moves inside the master cylinder (36), compressing the hydraulic fluid inside and sending it to the slave cylinder (37) through the duct (22). Since the internal diameter of the master cylinder (36) is smaller than that of the slave cylinder (37), the force exerted on the piston (23) of the master cylinder (36) is multiplied on the slave cylinder piston (32) by the number of times the surface area of the slave cylinder piston (32) is greater than that of the master cylinder piston (23). The slave cylinder piston (32) and the pusher (19) will tend to move outwards, causing the chainwheel (4) to rotate, receiving the initial force exerted by the rod of the crank (11) on the master cylinder piston (23) multiplied.

Both the chainwheel (4) and the support plate (6) are mounted on bearings (9) and rotate independently of each other, with the inner ring of these bearings being housed in the cranks axle (16). The anti-reverse stop crank (7) serves to keep the rod of the crank (11) and the pusher (19) close to the master cylinder piston (23) and the slave cylinder piston (32) respectively. This approximation can be adjusted by means of the thread with locknut on the pusher (19), which is attached by means of ball joints (15 and 20) at both ends, on the one hand to the slave cylinder piston (32) and on the other to the rod (12) of the chainwheel (4). Filling and purging of the hydraulic system is carried out through the bleeder (33) in the master cylinder (36) and the slave cylinder (37).

The result of this system is as follows:
The force exerted on the pedals (2) is transmitted by the rod (11) of the right crank (3) of the bike to the piston of the master cylinder (23), which transmits this force by means of the hydraulic fluid through the duct (22), multiplying it in the piston of the slave cylinder (32), the latter is transmitted by the pusher (19) to the chainwheel (4), which moves the transmission chain (26) as it turns, making the sprockets and the drive wheel turn, multiplying the force exerted on the pedals (2) on that wheel.

The hydraulic system in question can be activated or deactivated at the user's convenience by turning the locked/unlocked (5). In the locked position, the action of the hydraulic system on the traction and therefore its force multiplying effect is no longer effective. In this position the force required to move the bike exerted in the drive system when pedaling will depend only on the Chainwheel/Sprocket development that is engaged.

## Claims

1. Hydraulic force multiplier applied to the bike transmission system, which has an additional plate called support plate, coaxial to the conventional chainwheel that engages with a chain, turning the support plate independently, with a block of cylinders fixed to it, master and slave, with the chainwheel receiving the force multiplied by the piston of the slave cylinder, which in turn is pushed by the piston of the master cylinder. The crank, the cylinders and the chainwheel rotate independently of each other, transmitting the force multiplied by the pedal stroke of the crank when the piston of the master cylinder is pushed by the rod and by means of the hydraulic fluid flowing inside the duct, transmits this force multiplied to the piston of the slave cylinder and the latter by means of a pusher to the chainwheel and the chain, **characterised by** a hydraulic system consisting of a block (13) which has a master cylinder (36) and a slave cylinder (37) integrated into it, which receives the initial force from the pedal on the piston (23) of its master cylinder (36), this block (13) being fixed to a support plate (6) mounted on a bearing (9) on the crank axle (16), as is the chainwheel (4) which in turn is mounted on another bearing (9) on the crank axle (16), coaxial to the support plate (6), with a pusher (19) which receives the multiplied force from the piston (32) of the slave cylinder (37), transmitting it to the chainwheel (4) and consequently to the drive wheel.

2. Hydraulic force multiplier applied to bikes in accordance with reivindication 1, **characterised by** having a single block (13) which has the master cylinder (36) and the slave (37) integrated into it, connected by a duct (22).

3. Hydraulic force multiplier applied to bikes in accordance with reivindication 1 and 2, **characterised by** having a support plate (6) that rotates independently of the crank axle (16) and the chainwheel (4). This support plate rotates on a bearing (9) whose inner ring is mounted on the crank axle (16).

4. Hydraulic force multiplier applied to bikes in accordance with reivindication 1, 2 and 3, **characterised by** having a chainwheel (4) which receives the force multiplied when pedalling and which rotates independently of the crank axle (16) and the support plate (6). This chainwheel (4) rotates on a bearing whose inner ring is mounted on the crank axle (16).
